Europäisches Patentamt

**European Patent Office**

**Office européen des brevets**

(11) Publication number: **0 053 001**
**A1**

## (12) EUROPEAN PATENT APPLICATION

(21) Application number: **81305454.1**

(22) Date of filing: **18.11.81**

(51) Int. Cl.³: **B 62 D 13/00**
**B 62 D 7/14**

(30) Priority: **18.11.80 GB 8036888**
**06.08.81 GB 8124003**

(43) Date of publication of application:
**02.06.82 Bulletin 82/22**

(84) Designated Contracting States:
**AT BE CH DE FR GB IT LI LU NL SE**

(71) Applicant: **CRAVEN TASKER (ANDOVER) LIMITED**
**Anna Valley**
**Andover Hampshire SP11 7NF(GB)**

(72) Inventor: **Anderson, Geoffrey Brian**
**Filkins Riverview Close**
**Chilbolton Stockbridge Hampshire(GB)**

(74) Representative: **Broome, Geoffrey Edward et al,**
**KILBURN & STRODE 30 John Street**
**London, WC1N 2DD(GB)**

(54) Improvements in or relating to trailer and semitrailer vehicles.

(57) The disclosure relates to trailer vehicles, particularly those to carry substantial loads upwards of 100 tons and is directed to providing a trailer vehicle which is manoeuverable both in close quarters and around tortuous corners on highways and is also directed to spreading the weight of a load advantageously over the axles supporting the trailer and tractor vehicle.

In particular a trailer vehicle assembly is provided, comprising a main trailer frame (10) supported at the rear portion thereof by means of a number of wheeled rear axles (11), and means to steer the wheels of said rear axles, the wheels of the axles being steerable in either a first mode in which the wheels of all the axles are steered by the same angle at any time, or in a second mode in which the wheels of each successive more rearward axle are steered by a greater angle than the wheels of the adjacent more forward axle.

Furthermore a trailer vehicle assembly is provided, comprising a main trailer frame (10) supported at a rear portion thereof by a number of rear axles (11) and arranged to be supported at a front portion thereof by a tractor vehicle through the intermediary of a balancer frame (12); the balancer frame (12) being arranged to be coupled and supported at the front by a fifth wheel coupling with a tractor vehicle (9) and to be supported at the rear by a number of steerable axles (14), the front portion of the main frame being supported on the balancer frame (12) to pivot about a horizontal axis (13) running transverse to the length of the vehicle.

Fig. 2

EP 0 053 001 A1

## IMPROVEMENTS IN OR RELATING TO
## TRAILER AND SEMI TRAILER VEHICLES

This invention relates to trailer and semi trailer vehicles, particularly those designed to carry substantial loads of the order of 125 and 140 tons.

Vehicles travelling on the road are subject to various restrictions in various countries concerning the distribution of the load of the vehicle over the axle of the vehicle, and in particular, there are restrictions in many countries as to the load which can be carried on one axle at any time and which may be carried by the tractor vehicle. It is an object of the present invention to provide an arrangement which enables a substantial load to be carried while distributing this load in a satisfactory manner between the axles of a trailed vehicle and its tractor vehicle.

Again in trailer vehicles arranged for the carrying of substantial loads it is desirable that the vehicles are readily manoueverable so that the load carrying part of the vehicle can be positioned where desired for loading and unloading, and so that the vehicle can go around tortuous corners in the highway. It is an object of the present invention to provide an arrangement to assist in meeting these requirements.

According to one aspect of the present invention, the wheels of the rear support axle or axles of a trailed vehicle are steerable either in synchronism or progressively according to their position along the length of the vehicle in response to relative angular movement between the trailer and the tractor vehicle about the fifth wheel kingpin.

According to a further aspect of the invention, the wheels of the rear support axle or axles may be steered either in synchronism or progressively independently of the angular position or movement of the tractor vehicle about the fifth wheel kingpin.

According to a further aspect the present invention provides a trailer vehicle comprising a main trailer frame supported at the rear by a number of axles, and carried pivotally about a transverse horizontal axis at the front on a balancer or dolly frame, the balancer frame being supported at the rear thereof by a number of axles and arranged to be supported at the front thereof by a fifth wheel kingpin device on a tractor vehicle.

The balancer frame and the longitudinal positions on the fifth wheel kingpin, its support axle or axles, and the pivotal support for the main frame, are arranged to split the load from the front of the main frame between the tractor vehicle and the balancer support axles. By this means the load carried by the tractor vehicle may be kept down to the maximum value acceptable which is typically 30 tons, in a trailer vehicle which may be designed to have as much as 140 tons gross weight.

According to a further aspect of the present invention the support wheels on the axle or axles of such a balancer frame or of a further dolly interposed between a tractor vehicle and a main trailer frame of any other arrangement, are steerable either independently or in response to relative motion between the dolly and the tractor vehicle.

In order to promote a fuller understanding of the above and other aspects of the present invention, some embodiments will now be described by way of example only, with reference to the accompanying drawings in which:-

Figure 1 shows a plan view of a first embodiment of the invention being a trailer vehicle,

Figure 2 shows a side elevation of the embodiment of Figure 1 attached to a tractor vehicle,

Figure 3 shows a plan view of a second embodiment of the invention,

Figure 4 shows a side elevation of the embodiment of Figure 3,

Figure 5 shows in schematic plan view the steering arrangement for the rear axles of the embodiments of Figures 1 and 3,

Figure 6 shows part of the mechanism of Figure 5 in more detail,

Figure 7 shows a typical suspension for a rear axle of the embodiment of Figure 1,

Figure 8 shows a side elevation of a front axle of the embodiment of Figure 1,

Figure 9 shows a plan view of the axle of Figure 8,

Figure 10 shows in schematic plan view the steering mechanism for the front axles of the embodiment of Figure 1, and

Figure 11 shows a schematic cross-section of the mechanism of Figure 10.

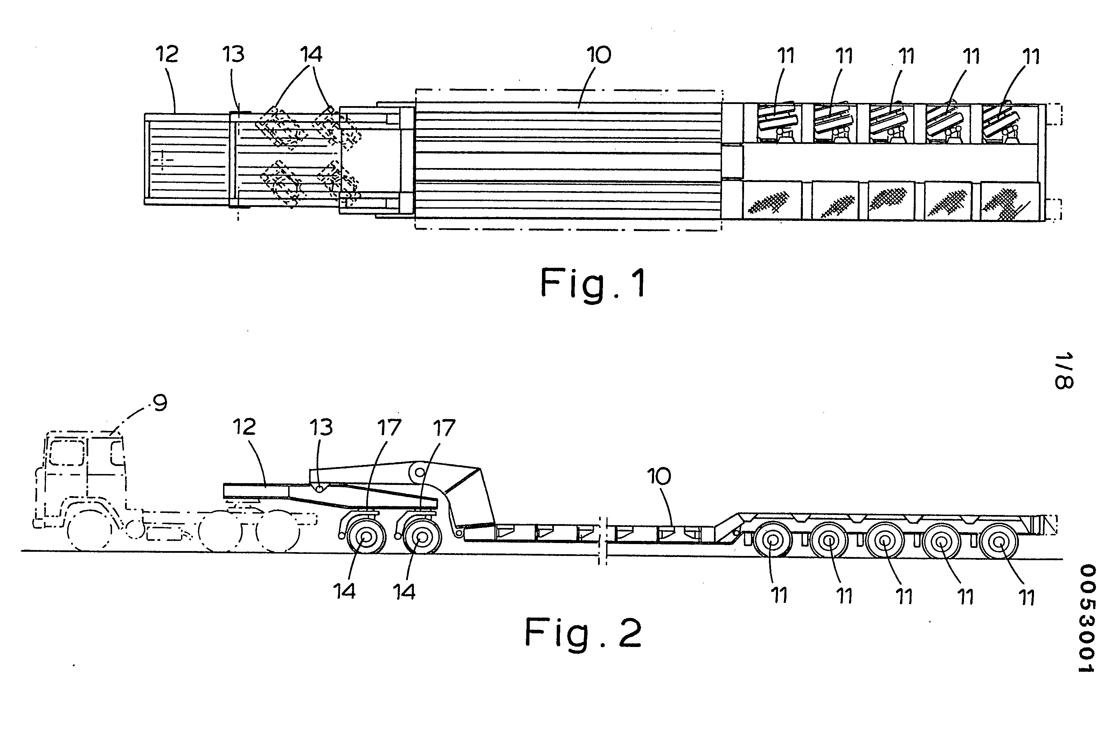

Figure 1 shows a semi trailer vehicle designed for some 140 tons gross weight towed by a tractor vehicle 9. It comprises a main frame 10, supported at the rear by a plurality of axles 11 and at the front on a balancer or dolly frame 12. The main frame 10 is supported on the balancer frame 12 pivotally about an axis 13 which is horizontal and transverse to the length of the vehicle. The balancer frame 12 is supported at the rear by a plurality of axles 14 and at the front by a fifth wheel coupling assembly 15 of known design per se, on a tractor vehicle indicated generally at 16. By this means, as seen in Figure 2, particularly, the weight of the vehicle may be distributed so that the loading on each of the five rear axles 11 is for instance 16 tons maximum per axle, the combined loading on the axles 14 supporting the rear of the balancer frame 12 is for instance 32 tons maximum and the load on the fifth wheel coupling on the tractor vehicle is for instance 28 tons, these figures being with a 110 payload carried on the main frame 10.

The rear axles 14 of the balancer frame are four in number as indicated in dotted outline in Figure 1 and are each mounted on a turntable arrangment 17 so as to be steerable on the balancer frame 12.

The axles 14 are coupled to the fifth wheel device so that they steer with a relative angular movement between the tractor vehicle and the balancer frame about the fifth wheel kingpin. The arrangement is such that if the tractor vehicle moves through 90° to the balancer frame, the axles 14 steer through 90° to allow for appropriate manoeuvre of the front end of the vehicle. The axles 14 may also be steered by separate means, independently of the angle of the tractor vehicle, for close manoeuvering of the vehicle.

The wheels on each side of the rear axles 11 of the main frame are steerable by means of suitable steering linkage. The wheels of the axles 11 may in the arrangement

shown in Figures 1 and 2 be steered by that linkage in response to angular movement between the tractor vehicle and the balancer frame about the fifth wheel kingpin or they may be steered by the linkage independently.

When the wheels of the rear axles 11 are steered in response to angular movement of the tractor vehicle, the wheels are steered through an angle which increases progressively in dependence upon the position along the length of the vehicle towards the rear of the axle to minimise wheel scrub as the vehicle as a whole turns around a corner. Alternatively, for close manoeuvering the wheels of the axles 11 may be steered all through the same angle so that in conjunction with suitable steering of the axles 14, the vehicle may be moved crab-wise.

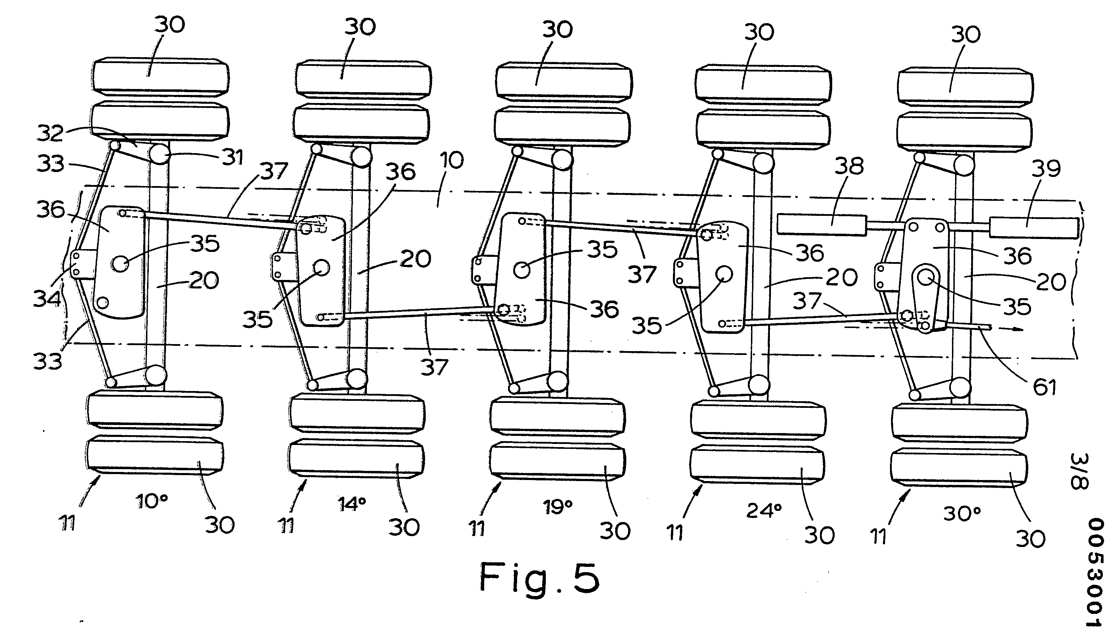

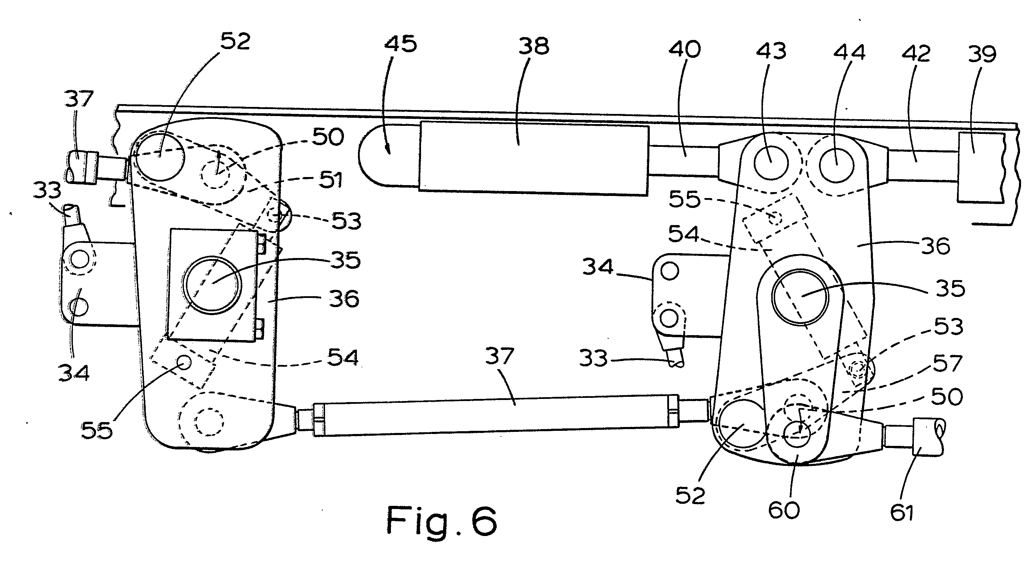

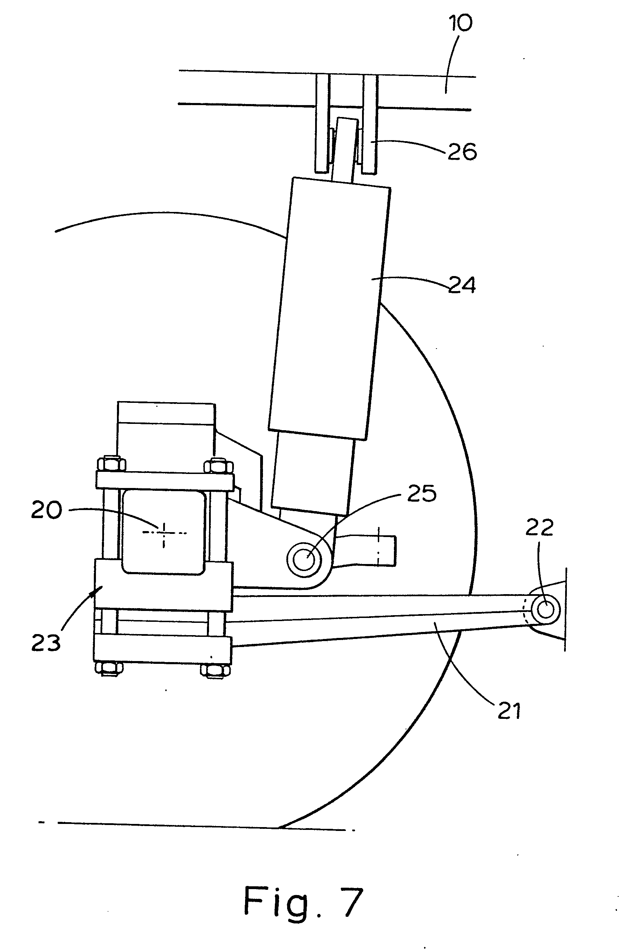

Figures 5 and 6 show an arrangement for the steering linkage of the axles 11; Figure 5 in particular shows a schematic plan view of the steering linkage for the axles 11. Each axle 11 comprises a cross beam 20 which is arranged to support the frame 10 by means of a suitable suspension. Figure 7 shows in schematic side elevation a suitable suspension arrangement for a beam 20, the arrangement being provided in duplicate, one on each side of the beam 20. A trailing link 21 is pivotally mounted on the frame 10 about an axis 22 and clamped to the beam 20 by means of a clamping arrangement 23. A hydraulic suspension unit 24 is arranged between a pivot axis 25 on the beam 20 and a pivot axis 26 on the frame 10. The hydraulic suspension device is of known design per se and may be arranged to raise or lower the height of the frame 10 above the ground. The trailing link 21 is preferably in the form of a folded leafspring as shown in Figure 7.

The wheels of each axle 11, as indicated at 30, are mounted on a stub axle steerably carried on the beam 20 by a kingpin arrangement indicated at 31. Each stub axle has a steering arm 32 connected to a track rod 33, the other end of which track rod is connected to a steering lever 34 pivotally mounted about an axis 35 centrally in the frame 10. The steering levers 34 are each rotatably coupled to a drive bracket 36 which is in the form of a double armed arrangement with the arms extending transversely across the frame 10. In order to connect the wheels 30 of the five axles 11 shown so that they steer together, respective arms of the drive brackets 36 of the adjacent axles 11 are connected by drag links 37. Thus moving one of the brackets 36 causes all of the brackets 36 to move, thus to steer the wheels of all the axles.

The free arm of the bracket 36 associated with the rearmost axle 11 (the right hand one in Figure 5) is coupled as shown to two hydraulic rams 38 and 39, the reaction from each ram being taken by pivotal mounting on the frame 10. Thus operation of the rams 38 and 39 will cause steering of all the wheels 30. Means is provided to supply hydraulic fluid under pressure to the rams 38 and 39 in response to angular movement between the tractor vehicle and the balancer frame, in a manner to be described below, or in the alternative to supply fluid under pressure from an auxiliary supply (not shown) in response to operation of manual control valves. Thus the wheels of the axle 11 can be steered hydraulically in response to angular movement between the tractor vehicle and the balancer frame or by manual movement of the control valves.

The drag links 37 are each pivotally mounted at their front ends to the respective drive bracket 36 at a fixed radius from the pivot axis 35 of the drive bracket 36. The drag links 37 are each pivotally mounted at their rear ends to the respective arm 36 at a radius from the pivot axis 35 of the drive bracket 36, which is adjustable by a small amount between the same radius that the front end is from the associated axis 35 and a lesser radius. It can be seen that when both ends of the drag links 37 are at the same radius from the axes 35, all the wheels 30 of the axles 11 will steer by the same amount on operation of the rams 38 and 39. When the rear ends of the drag links 37 are moved to the lesser radius from the respective axis 35, it can be seen that for a given steering moment of the rearmost axle 11 the successive more forward axles will steer by progressively lesser amounts. In a typical arrangement, if the rearmost axle steers by $30^{\circ}$ the successive more forward axles will steer by $24^{\circ}$, $19^{\circ}$, and $10^{\circ}$. This enables the axles 11 to be steered progressively as discussed above when the vehicle is being driven in normal fashion along the highway, for good handling qualities. When the drag link ends are all at the same radius, the axles may all be steered by the same amount for close manoeuvering purposes, either in response to movement of the tractor vehicle or independently.

Figure 6 shows in more detail the arrangement of the drive brackets 36, particularly the rearmost bracket and the adjacent one. The bracket 36 is pivotally mounted as mentioned about an axis 35 in the frame 10 and the piston rods 41 and 42 of the hydraulic rams 38 and 39 are pivotally connected to one arm of the bracket 36 at the axes 43 and 44. The cylinders of the rams 38 and 39 are pivoted on the frame 10 by trunnions as indicated at 45. The rear end of the associated drag link 37 is pivotally mounted at an axis 50 on a link 51 which itself is pivotally mounted about an axis 52 in the arm of the bracket 36. The free end of the link 51 is pivotally connected at an axis 53 to the piston rod to a small hydraulic cylinder 54 which is itself pivotally mounted in the bracket 36 about an axis 55.

Thus it can be seen that operation of the hydraulic cylinder 54 will pivot the link 51 about the axis 52, thus adjusting the radius of the pivot point 50 from the pivot axis 35 of the bracket 36. By this means the rearmost end of the drag link 37 is adjusted between the arrangements discussed above. Suitable hydraulic circuitry (not shown) is provided to supply the cylinders 54.

Also shown in Figure 6, attached to the rearmost bracket 36 is an additional steering lever 60 pivotally connected at its outer end to a link 61. This link 61 can be used for steering the axles 11 mechanically independently of the arms discussed above, particularly when the frame 10 of the vehicle discussed above is for any reason to be manoeuvred by a tractor or pusher vehicle attached to the back end of it.

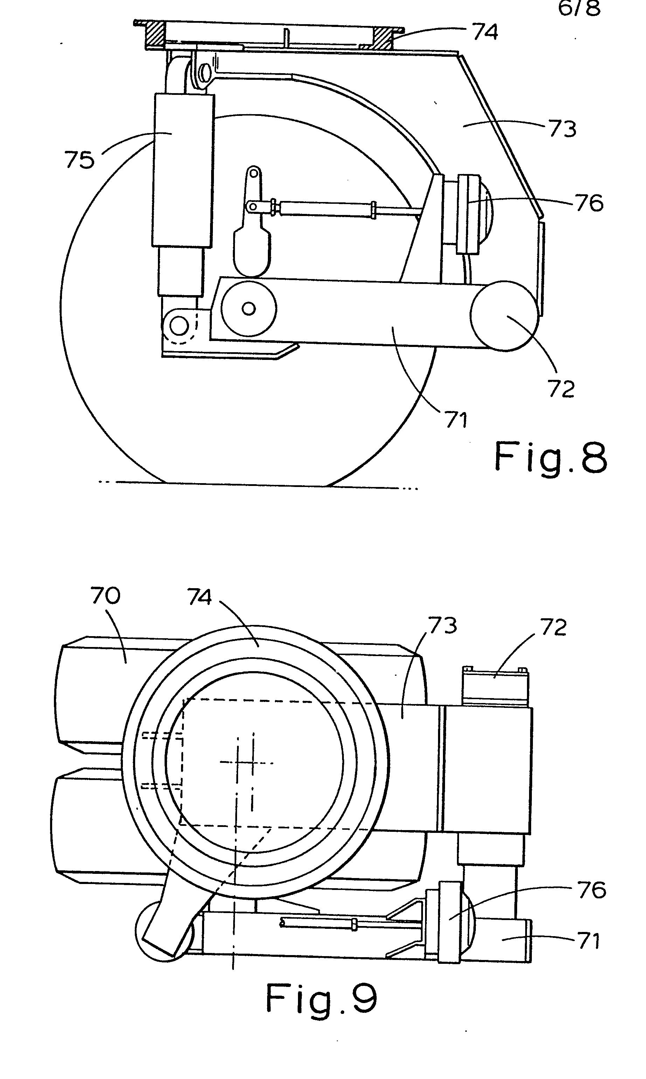

Figures 8 and 9 show respectively a side elevation of a plan view in schematic outline, of one of the axles 14 of the vehicle of Figures 1 and 2. The wheels 70 of the axle 14 are carried on a stub axle mounted on a trailing link 71 pivotally mounted about an axis 72 on a frame 73. The frame 73 is provided at the top with a turntable 74 by which it is mounted for rotation on steering, in suitable bearings, in the balancer frame 12. A hydraulic suspension device 75 is arranged between the frame 73 and the link 71 for suspension purposes. The device 75 is of known type per se, and apart from springing the axle, may be used to raise and lower the balancer frame 12. A brake mechanism for the axle which again is of known type per se, is illustrated schematically at 76.

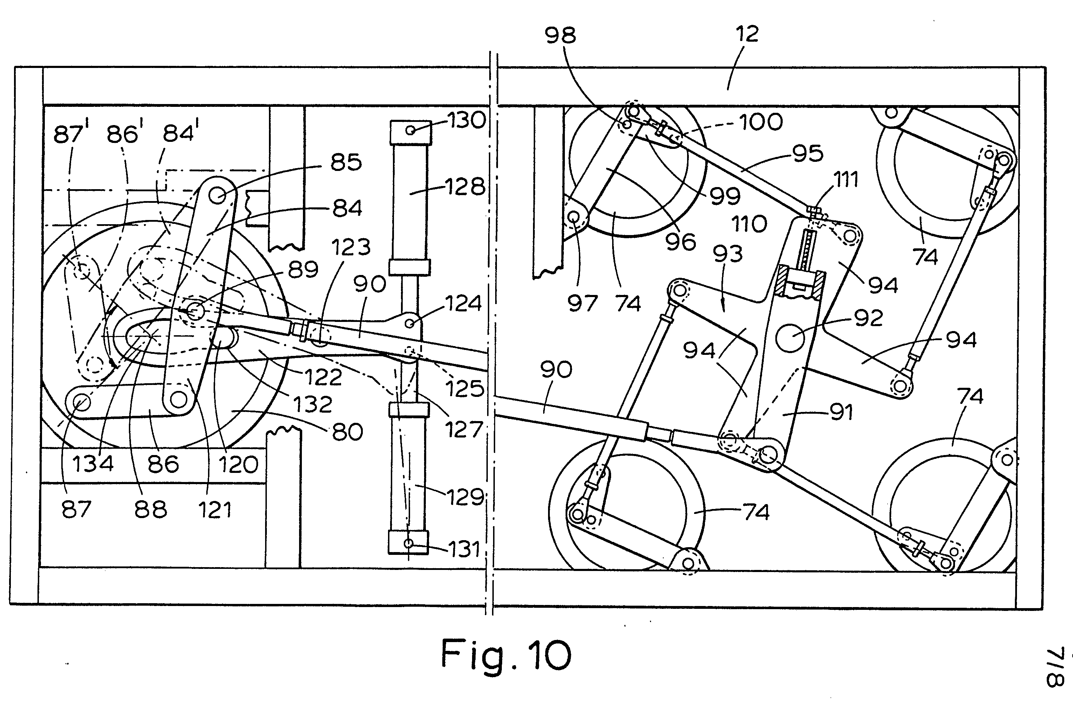

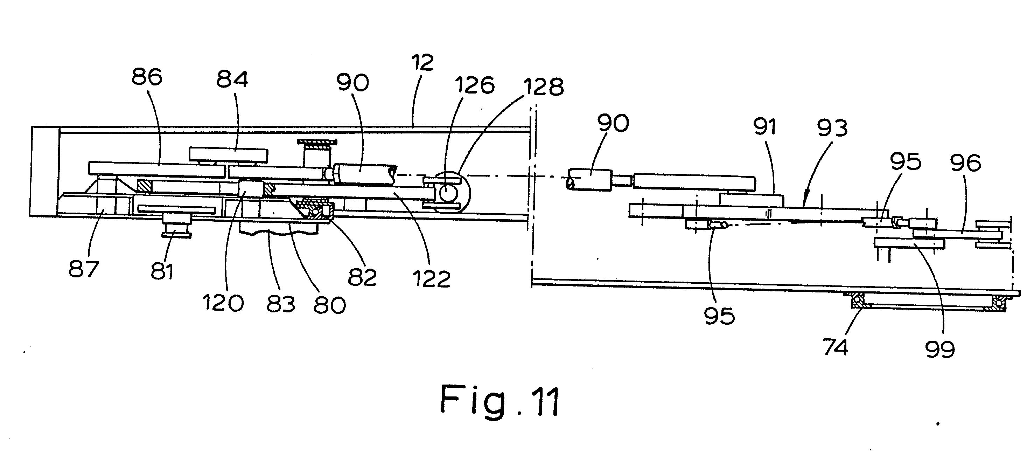

Figures 10 and 11 show in schematic outline a plan view of the balancer frame 11, and in particular the mechanism for coupling the steering of the axles 14 and the axles 11 to the motion between the tractor vehicle and the balancer frame 12.

At the front part of the balancer frame 12 there is provided a turntable 80 provided with a fifth wheel kingpin 81 of known design per se for coupling with a conventional fifth wheel support on the tractor vehicle. The turntable 80 is rotatably mounted in the frame 12 by means of a bearing 82, and is provided with a wedge device 83 arranged to locate in the lead-in notch on the tractor vehicle support plate, so that when the fifth wheel coupling is engaged, the turntable 80 is angularly located on the tractor vehicle and thus rotates with it as the tractor vehicle steers.

Each of the axles 14, in this arrangement four in number, are mounted by their turntables 74 in the rear part of the balancer frame 12 so that they can rotate for steering in the balancer frame. The mechanism of Figures 10 and 11 provides inter alia for the coupling of the rotation of the turntable 80 to the turntables 74 for steering the axles.

The mechanism comprises a steering lever 84 pivotally mounted at a point 85 on the frame 12, at one end, and pivotally connected at the other end by means of a link 86 to a pivot pin 87 mounted on the turntable 80 at a point forwardly and laterally displaced from the axis 88 of the turntable 80 of the kingpin 81. Thus as the tractor vehicle steers relative to the frame 12, and the turntable 80 rotates, the lever 84 is caused to pivot backwards and forwards, an extreme position of 90° steering to the right being indicated by the dotted outlines 87' 86' and 84'.

An intermediate point of the lever 84 is pivotally connected at the point 89 to one end of a steering rod 90. The other end of the steering rod 90 is pivotally connected to the outer end of an arm 91 pivotally mounted about an axis 92 in the frame 12 at a point centrally disposed among the four turntables 74. The arm 91 is connected, in a manner described in more detail below, to a star member 93 which also pivots about the axis 92. Four arms 94 of the star member 93 are each pivotally connected at their outer end to a respective track rod 95 associated with the steering of a respective turntable 74. The other end of each track rod 95 is pivotally connected to the outer end of a steering arm 96, the other end of which is pivotally mounted on an axis 97 in the frame 12. An intermediate point 98 of each arm 96 is connected by a pivotal link 99 to an associated pivot pin 100 on the respective turntable 74. By this arrangement, 90° of movement between the turntable 80, and thus the tractor vehicle, and the frame 12, results in a corresponding 90° of steering of each of the turntables 74. The arrangement of the links and arms 86 and 84, and 99 and 96 enables 90° of rotary movement to be achieved in either direction while maintaining fabourable operating angles of the various pivotal links relative to one another.

A releasable wedge arrangement indicated generally at 110 is provided to be operative between the arm 91 and the star member 93. The wedge device is adjustable by means of a screw 111 between a first position by which it locks the arm 91 rigidly to the star 93 in a correct steering orientation, and a second position in which it releases the arm 91 from the star member 93 but locks the star 93 in a central position with the axles on the turntables 74 steering straight. The purpose of this arrangement is to enable the steering of the turntable 74 to be disconnected and the turntables locked whenever it is wished to tow the balancer frame 12 behind the tractor vehicle in the absence of the main frame 10. It will be appreciated in connection with this last point, that a main frame 10 can be disconnected at the axis 13 for loading purposes, and the swan-neck front portion of the main frame may also be disconnected from the platform of the main frame in known manner per se for loading purposes.

The turntable 80 has a second pin 120 mounted thereon behind the axis 88. The pin 120 engages in a slot 121 formed in one end of a double arm 122 which is pivotally mounted at the point 123 in the frame 12. The other end of the arm 122 is pivotally connected at the points 124 and 125 to the piston rods 126 and 127 of hydraulic rams 128 and 129, which in turn are pivotally mounted about the axes 130 and 131 in the frame 12. Thus it can be seen that rotary movement of the turntable 80 will cause the piston rods of the rams 128 and 129 to be moved in and out in an appropriate sense. The rams 128 and 129 are hydraulically connected to the rams 38 and 39 associated with the steering of the rear axles 11, thus causing these to steer on rotation of the turntable 80, and thus the tractor vehicle, relative to the balancer frame 12. The rams 128 and 129 and the rams 38 and 39 are preferably each made as double acting devices with appropriate sides of their pistons interconnected so that there is in effect a dual hydraulic circuit coupling the steering. Suitable valve means is provided in this hydraulic circuit to disconnect the rams 38 and 39 from the rams 128 and 129 and to selectively couple, as mentioned above, the rams 38 and 39 to a separate source of hydraulic fluid under pressure, such as an auxiliary power unit, for the purpose of manually steering the rear axles. This can be for steering on the road, but is particularly for manoeuvering in close quarters.

The slot 121 in the arm 122 is provided with a parallel portion 132 which closely engages the pin 120. After the turntable is rotated by a particular amount, typically 30°, it is arranged that the pin 120 has moved out of the parallel portion 132 to engage an enlarged radiused portion 134 of the slot 121. As a result of this further rotation of the turntable 80 past that chosen point causes no further pivoting of the arm 122 and thus the extent of steering of the rear axles 11 is limited to a chosen angle.  This is
needed for the safe manoeuvering of the vehicle on the road
in normal driving conditions, and achieves an arrangement
in which the rear axles steer round a centre of turn disposed alongside the front portion of the main frame 10.
Preferably the geometry of the mechanism as a whole is
arranged so that the axles 14 and 11 are steered an appropriate amount on Ackermann steering principles in association
with the tractor vehicle.

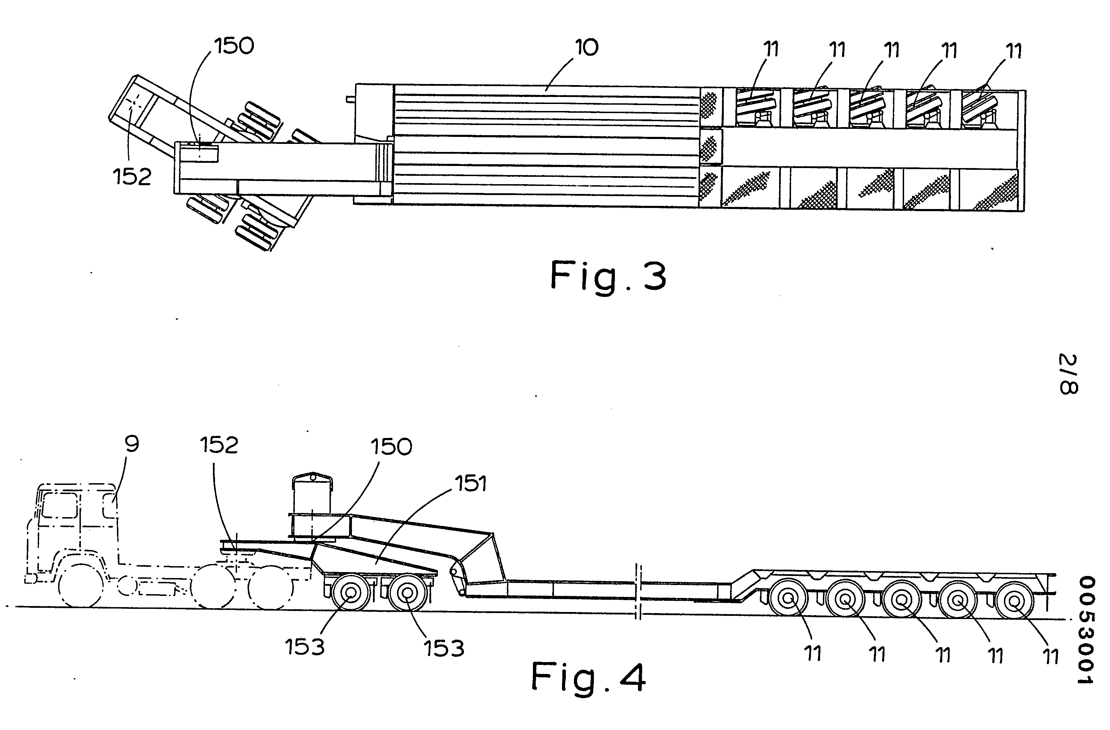

Figures 3 and 4 show a further embodiment of the invention
which is generally similar to that of Figures 1 and 2 with
the rear end axles 11 exactly similar and steered in an
exactly similar fashion.  The front portion of the main
frame 10 is coupled by a pivot, typically a fifth wheel
coupling 150 to a balancer or dolly frame 151 which is coupled
by a fifth wheel coupling 152 to the tractor vehicle 9,
and which is carried by two axles 153 which are mounted on
turntables pivotally carried on the frame 151 at the centre
line thereof.  Such axles 153 are steered either in response
to angular movement between the tractor vehicle 9 and the
frame 151 by a mechanism similar to that discussed above, or
independently.  In a further arrangement the main frame 10
can be carried directly by a fifth wheel coupling on the
tractor 9, with the rear axles 11 being steered in the manner
described above in response to angular movement between
the tractor 9 and the main frame 10.

With the arrangements described, it is possible to
provide a vehicle which is very manoeuverable in operation.
In particular, the vehicle can turn through sharp corners
with the steering of the balancer frame wheels, the vehicle
can be reversed in a conventional manner for articulated
vehicles, and the main frame can be easily manoeuvered
in close operations.

CLAIMS

1. A trailer vehicle assembly comprising a main trailer frame supported at the rear portion thereof by means of a number of wheeled rear axles, and means to steer the wheels of said rear axles, the wheels of the axles being steerable in either a first mode in which the wheels of all the axles are steered by the same angle at any time, or in a second mode in which the wheels of each successive more rearward axle are steered by a greater angle than the wheels of the adjacent more forward axle.

2. A trailer vehicle as claimed in Claim 1, in which the front portion of the trailer frame is arranged to be coupled in articulated fashion to a tractor vehicle, and hydraulic means is provided to steer the wheels of said rear axles in dependence upon the angle between the tractor vehicle and the main trailer frame.

3. A trailer vehicle as claimed in Claim 2 in which the front portion of the trailer frame is arranged to be coupled to the tractor vehicle through the intermediary of a balancer frame; the balancer frame being arranged to be coupled at the front to the tractor vehicle by means of a fifth wheel coupling in known manner per se and supported at the rear by a number of steerable axles, and the front portion of the main frame being supported on the balancer frame.

4.     A trailer vehicle as claimed in Claim 3, in which the front portion of the trailer frame is supported on the balancer frameto pivot about a horizontal axis which is transverse to the length of the vehicle.

5.     A trailer vehicle as claimed in Claim 3 or 4, in which means is provided to steer the axles of the balancer frame in dependence upon the angle between the balancer frame and the tractor vehicle.

6.     A trailer vehicle as claimed in any one of Claims 1 to 5 in which said means for steering the rear axle wheels comprises, for each rear axle a drive bracket pivotally mounted about a vertical axis centrally in the rear portion of the main trailer frame and connected to steering arms associated with the wheels of that axle by means of an arm which is pivotal with the drive bracket and track rods; the drive brackets being interconnected by means of drag links running in the direction of the length of the frame so that the drive brackets pivot together, and a hydraulic cylinder device operative between the frame and one of the drive brackets, preferably that of the rear axle, to pivot that drive bracket thus to steer the wheels of the rear axles.

7.     A trailer vehicle as claimed in Claim 6 in which the front end of each said drag link is pivotally connected to the respective drive bracket at a point which is a fixed radius from the pivot axis of the drive bracket; and the rear end of each said drag link is pivotally connected to the respective drive bracket at a point which is adjustable between a radius which is the same as said fixed radius and a lesser radius.

8.    A trailer vehicle as claimed in Claim 7, in
which the rear end of each said drag link is pivotally
connected to an adjustment link which is pivotable between
two positions on the respective drive bracket by means of
a fluid pressure operated device for such adjustment.

9.    A trailer vehicle as claimed in any preceding
claim as dependent on Claim 3, in which the balancer frame
is provided with a rotatable turntable carrying said fifth
wheel coupling kingpin, the turntable having means to
angularly locate it with respect to the tractor vehicle
so as to rotate therewith, each axle of the balancer frame
is mounted on a turntable rotatably mounted in the balancer
frame, and lever means is provided to couple rotation of
the fifth wheel turntable with rotation of the axle
turntables to steer the balancer frame axles in dependence
on the angle of the tractor vehicle to the balancer frame.

10.    A trailer vehicle as claimed in Claim 9, in
which said lever means comprises a steering lever pivotally
mounted at one end in the balancer frame and connected
at the other end by means of a pivotal link to a pivot
point on the fifth wheel turntable, a steering rod pivotally
connected at a forward end to an intermediate point along
the steering lever and at a rearward end to a drive arm
rotatably connected with a star member which is pivotally
mounted centrally in the balancer frame, respective arms
of the star member being connected to rotate and thus steer
respective ones of the axle turntables.

11.  A trailer vehicle as claimed in Claim 10, in which each arm of said star member is pivotally connected to a track rod associated with an axle turntable, each axle turntable having a pivot pin connected by a pivotal link to one end of a steering lever the other end of which is pivotally mounted in the balancer frame, the track rod being pivotally connected at an intermediate point on the steering lever.

12.  A trailer vehicle as claimed in Claim 10 or 11, in which said drive arm is releasably connected to said star member, and means is provided to lock the star member in a central position when it is disconnected from the drive arm.

13.  A trailer vehicle as claimed in any one of Claims 9 to 12, as dependent upon Claim 6 in which said turntable is provided with a pin engaging in a slot formed in a lever pivotally mounted in the balancer frame and connected to a hydraulic ram device so that rotation of the turntable from its central position drives hydraulic fluid from the device, and in which the ram device is hydraulically connected to the hydraulic cylinder device operative to steer the rear axle wheels.

14.  A trailer vehicle as claimed in Claim 13, in which said slot has an enlarged portion arranged so that rotation of the fifth wheel turntable beyond a chosen point causes no further movement of the lever thus limiting the steering of said rear axles.

0053001

15.   A trailer vehicle assembly comprising a main trailer frame supported at a rear portion thereof by a number of rear axles and arranged to be supported at a front portion thereof by a tractor vehicle through the intermediary of a balancer frame; the balancer frame being arranged to be coupled and supported at the front by a fifth wheel coupling with a tractor vehicle and to be supported at the rear by a number of steerable axles, the front portion of the main frame being supported on the balancer frame to pivot about a horizontal axis running transverse to the length of the vehicle.

KILBURN & STRODE
Chartered Patent Agents
Agents for the Applicants

Fig.1

Fig.2

150

152

10

11 11 11 11 11

## Fig. 3

9

152

150

151

153 153

11 11 11 11 11

## Fig. 4

Fig. 5

Fig. 6

0053001

Fig. 7

74

75

73

76

72

71

# Fig.8

70    74

73    72

76

71

# Fig.9

Fig. 10

Fig. 11

0053001

**European Patent Office**

**EUROPEAN SEARCH REPORT**

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| Y | GB - A - 2 029 784 (J.H. CARRUTHERS & CO.)  * claims 1 to 4; page 2, lines 30 to 56; fig. 7 to 9 * | 1 | B 62 D 13/00  B 62 D 7/14 |
| Y | DE - C - 951 416 (K. KÄSSBOHRER FAHRZEUG-WERKE GMBH)  * claims 1 to 3; fig. 1 * | 1,6 | |
| Y | EP - A1 - 0 001 669 (EKSELSE KONSTRUKTIE WERKEN)  * claim 1; page 3, line 6 to page 5, line 18; page 6, lines 4 to 24; fig. 1, 2 * | 1,2,6 | **TECHNICAL FIELDS SEARCHED (Int.Cl. ³)**  B 62 D 7/14  B 62 D 13/00  B 62 D 53/08 |
| Y | US - A - 4 070 033 (G.L. WEIR et al.)  * fig. 1, 2 * | 3,4,15 | |
| Y | US - A - 3 105 704 (A.G. SCHRAMM)  * column 2, lines 5 to 34; fig. 1, 2 * | 3,5,15 | |
| Y | DE - A - 1 630 626 (K. KÄSSBOHRER FAHR-ZEUGWERKE GMBH)  * page 6, line 22 to page 9, line 18; fig. * | 9 | **CATEGORY OF CITED DOCUMENTS** |
| Y | US - A - 2 816 773 (R.G. MILLER)  * column 2, line 71 to column 4, line 50; fig. *  ./.. | 9,10 | X: particularly relevant if taken alone Y: particularly relevant if combined with another document of the same category A: technological background O: non-written disclosure P: intermediate document T: theory or principle underlying the invention E: earlier patent document, but published on, or after the filing date D: document cited in the application L: document cited for other reasons |

&: member of the same patent family, corresponding document

The present search report has been drawn up for all claims

| Place of search | Date of completion of the search | Examiner |
|---|---|---|
| Berlin | 04-02-1982 | PETTI |

EPO Form 1503.1  06.78

0053001

**European Patent Office**

**EUROPEAN SEARCH REPORT**

Application number

EP 81 30 5454.1
- page 2 -

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| Y | US - A - 3 596 730 (R.F. CECCE) <br> * column 2, line 71 to column 4, line 50; fig. * <br> ---- | 1,7,8 | |
| | | | **TECHNICAL FIELDS SEARCHED (Int. Cl.³)** |